(19) Europäisches Patentamt
European Patent Office
Office européen des brevets

(11) **EP 3 523 602 B1**

(12) **FASCICULE DE BREVET EUROPEEN**

(45) Date de publication et mention
de la délivrance du brevet:
**15.12.2021 Bulletin 2021/50**

(21) Numéro de dépôt: **17787237.1**

(22) Date de dépôt: **05.10.2017**

(51) Int Cl.:
**G01B 11/02** *(2006.01)*     **B64C 27/00** *(2006.01)*
**G05D 1/02** *(2020.01)*

(86) Numéro de dépôt international:
**PCT/FR2017/052739**

(87) Numéro de publication internationale:
**WO 2018/065737 (12.04.2018 Gazette 2018/15)**

(54) **SYSTÈME DE MESURE DE LA DISTANCE D'UN OBSTACLE PAR FLUX OPTIQUE**

SYSTEM ZUR MESSUNG DES ABSTANDS EINES HINDERNISSES DURCH OPTISCHEN FLUSS

SYSTEM FOR MEASURING THE DISTANCE OF AN OBSTACLE BY OPTICAL FLOW

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.10.2016 FR 1659663**

(43) Date de publication de la demande:
**14.08.2019 Bulletin 2019/33**

(73) Titulaires:
• **Université d'Aix Marseille**
**13284 Marseille Cedex 07 (FR)**
• **Centre National de la Recherche Scientifique**
**75016 Paris (FR)**

(72) Inventeurs:
• **VIOLLET, Stephane Marie Vincent**
**13600 Ceyreste (FR)**
• **COLONNIER, Fabien Thierry Alain**
**49450 Saint Macaire en Mauges (FR)**
• **VANHOUTTE, Erik**
**13009 Marseille (FR)**

(74) Mandataire: **de Jong, Jean Jacques et al**
**Omnipat**
**24, place des Martyrs de la Résistance**
**13100 Aix en Provence (FR)**

(56) Documents cités:
**FR-A1- 3 012 231    US-A1- 2012 197 461**

• **RUFFIER F ET AL: "Visual control of two aerial micro-robots by insect-based autopilots", ADVANCED ROBO, VSP, ZEIST, NL, vol. 18, no. 8, 1 janvier 2004 (2004-01-01), pages 771-786, XP009133333, ISSN: 0169-1864, DOI: 10.1163/1568553041738086**
• **VIOLLET S ET AL: "Biologically-inspired visual scanning sensor for stabilization and tracking", INTELLIGENT ROBOTS AND SYSTEMS, 1999. IROS '99. PROCEEDINGS. 1999 IEEE /RSJ INTERNATIONAL CONFERENCE ON KYONGJU, SOUTH KOREA 17-21 OCT. 1999, PISCATAWAY, NJ, USA,IEEE, US, vol. 1, 17 octobre 1999 (1999-10-17), pages 204-209, XP010362567, DOI: 10.1109/IROS.1999.813005 ISBN: 978-0-7803-5184-4**
• **KREITMAIR-STECK W ET AL: "HELIRADAR - A ROTATING ANTENNA SYNTHETIC APERTURE RADAR FOR HELICOPTER ALLWEATHER OPERATIONS", SYMPOSIUM ON DUAL USAGE IN MILITARY AND COMMERCIAL TECHNOLOGYIN GUIDANCE AND CONTROL, XX, XX, 20 octobre 1994 (1994-10-20), pages 12/01-12/08, XP000607925,**

## Description

### Domaine technique

L'invention est relative aux systèmes de détection d'obstacles utilisant les flux optiques, notamment pour des aéronefs.

### Arrière-plan

Les flux optiques sont souvent envisagés dans des systèmes d'anticollision pour drones. Les articles de Laurent Muratet et al., "A Contribution to Vision-Based Autonomous Helicopter Flight in Urban Environments" (Robotics and Autonomous Systems, Volume 50, Issue 4, Pages 195-209, 31 March 2005), et de Simon Zingg et al., "MAV Navigation through Indoor Corridors Using Optical Flow" (ICRA 2010), par exemple, proposent de guider un drone entre des bâtiments en égalisant les flux optiques des bandes latérales d'une image prise par une caméra orientée dans la direction de déplacement. Les flux optiques de l'image sont ainsi utilisés de manière qualitative ou différentielle, sans calculer de vitesse ni de distance absolues.

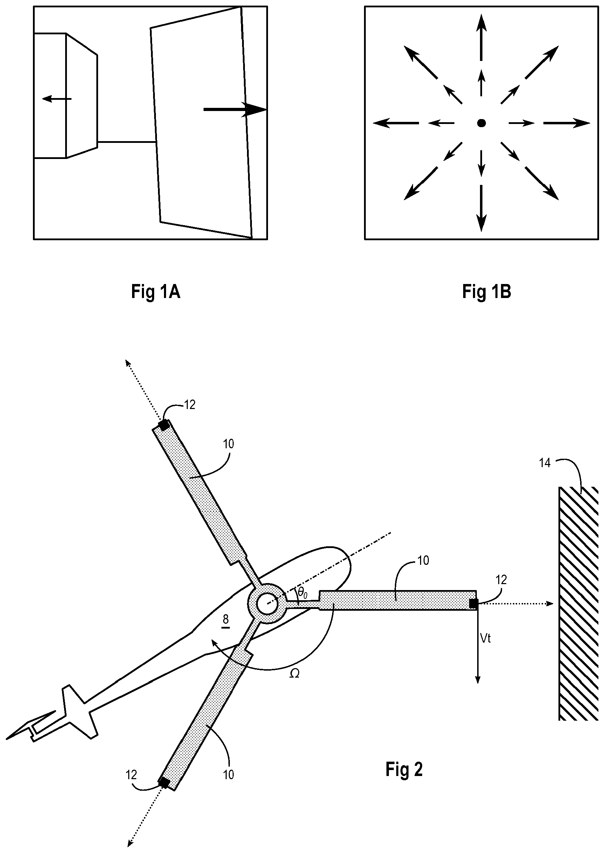

La figure 1A illustre une image prise par une caméra frontale au cours du déplacement d'un drone entre des bâtiments, selon une configuration proposée dans ces articles. Un bâtiment proche, visible sur la bande droite de l'image, provoque un flux optique (représenté par une flèche vers la droite) plus élevé qu'un bâtiment éloigné apparaissant dans la bande gauche de l'image. L'observation ponctuelle des flux optiques de cette image tend à indiquer qu'il faut tourner à gauche pour diminuer le flux optique à droite.

La figure 1B illustre un flux optique obtenu lorsque la caméra fait face à un obstacle frontal plat (une façade) qui occupe tout le champ de vision. Le flux optique croît radialement depuis le centre, le flux étant nul dans la zone centrale. Un tel champ de flux n'est exploitable pour éviter une collision que si l'image de l'obstacle déborde suffisamment de la zone centrale pour que le flux optique soit mesurable. Si l'obstacle est petit et se trouve sur l'axe de déplacement, il pourrait rester indétectable.

Pour déterminer une distance à partir d'un flux optique, il est connu qu'il faut utiliser les composantes de translation, alors que les valeurs brutes de flux optique fournies par les capteurs incluent des composantes de rotation qu'il convient de compenser. Les composantes de rotation à compenser peuvent être mesurées par un système gyroscopique monté dans l'aéronef.

Ainsi, les flux optiques ne sont en général pas exploités pour mesurer des distances de façon quantitative. Dans certains véhicules, les flux optiques sont cependant utilisés pour fournir une vitesse de façon quantitative, par exemple la vitesse au sol d'un aéronef. Pour calculer la vitesse, le système a besoin de la distance à l'objet observé (ex. l'altitude de vol), valeur qui est connue ou fournie au système par un autre capteur (ex. altimètre).

RUFFIER F ET AL: "Visual control of two aerial micro-robots by insect-based autopilots",ADVANCED ROBO, VSP, ZEIST, NL, vol. 18, no. 8, 1 janvier 2004, pages 771-786, propose de maintenir la distance au sol d'un drone volant à vitesse constante en ajustant l'altitude de sorte à tendre vers un flux optique de consigne.

VIOLLET S ET AL: "Biologically-inspired visual scanning sensor for stabilization and tracking",INTELLIGENT ROBOTS AND SYSTEMS, 1999. IROS '99. PROCEEDINGS. 1999 IEEE /RSJ INTERNATIONAL CONFERENCE ON KYONGJU, SOUTH KOREA 17-21 OCT. 1999, PISCATAWAY, NJ, USA,IEEE, US, vol. 1, 17 octobre 1999, pages 204-209, décrit un dispositif utilisant un capteur de flux optique destiné à assurer la stabilisation sans contact d'un engin et notamment à traiter des problèmes de perturbations tels que ceux résultant de dérives angulaires à faible vitesse.

### Résumé

L'invention est définie par les revendications indépendantes. Des modes de réalisation de l'invention sont exposés dans les revendications dépendantes.

Pour mesurer la distance d'un obstacle selon l'invention, on peut prévoir de mesurer un flux optique radialement en rotation sur un cercle dans un plan coupant l'obstacle ; et de déterminer la distance de l'obstacle en fonction de l'amplitude du flux optique, du rayon du cercle, et de la vitesse de rotation.

On peut pour cela prévoir un dispositif de mesure de distance d'un obstacle, comprenant un élément rotatif configuré pour tourner à une vitesse de rotation déterminable ; et un capteur de flux optique configuré pour mesurer un flux optique en un point excentré de l'élément rotatif.

Le dispositif de l'invention comprend un circuit d'exploitation du capteur de flux optique configuré pour déterminer la distance de l'obstacle à partir d'une composante de vitesse de translation dans le flux optique mesuré.

Le capteur de flux optique peut être configuré pour mesurer le flux optique radialement ou axialement.

Le circuit d'exploitation du capteur de flux optique peut être configuré pour déterminer la distance de l'obstacle à partir d'un maximum de flux optique mesuré au cours d'une révolution de l'élément rotatif, de l'excentration du point de mesure, et de la vitesse de rotation.

Le circuit d'exploitation peut être configuré pour déterminer l'orientation de l'obstacle à partir de la position angulaire de l'élément rotatif pour laquelle le maximum de flux optique est mesuré.

Le capteur de flux optique peut être un capteur de mouvement local. Le capteur de flux optique peut alors comprendre un système optique monté excentré sur l'élément rotatif, un capteur photosensible déporté à proximité du centre de rotation de l'élément rotatif, et des fibres optiques reliant le système optique au capteur photosensible.

Les valeurs de la vitesse de rotation et de l'excentration peuvent être choisies pour rendre négligeables d'autres composantes de vitesse survenant au cours de l'utilisation du dispositif.

Une pale de rotor d'hélicoptère peut être munie d'un dispositif de mesure du type susmentionné, le capteur de flux optique étant configuré pour mesurer le flux optique à l'extrémité distale de la pale.

## Description sommaire des dessins

Des modes de réalisation seront exposés dans la description suivante, faite à titre non limitatif en relation avec les figures jointes parmi lesquelles :

- les figures 1A et 1B, précédemment décrite, représentent des images utilisées pour exploiter un flux optique ;

- la figure 2 illustre un hélicoptère en vue de dessus, comportant des capteurs de flux optique en bout de pale, selon un mode de réalisation d'un système de mesure de distance basé sur des flux optiques ;

- la figure 3 est un graphe illustrant l'évolution du flux optique fourni par le système de la figure 2 en présence d'un obstacle vertical plan en fonction de la position angulaire des pales ;

- la figure 4 illustre un exemple de capteur de mouvement local utilisable dans le système de la figure 2 ; et

- la figure 5 illustre une variante de capteur de mouvement local utilisable dans le système de la figure 2.

## Description de modes de réalisation

Un flux optique est indissociable de la présence de mouvement dans l'image observée par le capteur. Les mesures sont d'autant meilleures que la vitesse est élevée et que la zone d'intérêt est éloignée de l'axe de déplacement. Jusqu'à présent, la mesure du flux optique dans un aéronef était basée sur le seul mouvement de l'aéronef. Or certains aéronefs, comme les hélicoptères, peuvent avoir un vol lent ou stationnaire, rendant difficile la détection d'obstacles près des pales, comme une paroi rocheuse, avec les techniques connues basées sur les flux optiques.

On propose ici d'animer le capteur de flux optique d'un mouvement permanent par rapport au véhicule, selon une configuration offrant un flux optique exploitable même si le véhicule est immobile. Plus spécifiquement, on propose de mesurer le flux optique en rotation sur un cercle, par exemple à l'extrémité des pales du rotor d'un hélicoptère.

Les rotations sont en principe inexploitables dans un flux optique, car elles introduisent des composantes indépendantes de la distance d'observation. Cela n'est vrai en réalité que pour les rotations « pures », c'est-à-dire lorsque le capteur de flux est sur l'axe de rotation. Le fait d'excentrer le capteur de flux par rapport à l'axe de rotation produit une vitesse tangentielle qui, elle, introduit une composante de translation exploitable dans le flux optique.

La figure 2 illustre un exemple de mise en oeuvre de ce système dans un hélicoptère. L'hélicoptère 8, vu de dessus, comprend à titre d'exemple un rotor à trois pales 10. A l'extrémité distale de chaque pale est monté un capteur de flux optique 12, orienté radialement vers l'extérieur. Ainsi l'axe d'observation de chaque capteur, illustré par une flèche en pointillés, est radial.

Le rotor tourne à une vitesse angulaire $\Omega$, provoquant une vitesse tangentielle Vt des capteurs, égale à $\Omega R$, où R est la distance des capteurs par rapport au centre de rotation. Chaque capteur produit un flux total, exprimé en radians par seconde :

$$\omega_{tot} = \omega_{rot} + \omega_{trans}$$

Où $\omega_{rot}$ est une composante de rotation égale à la vitesse angulaire $\Omega$ du rotor et $\omega_{trans}$ est une composante de translation qui dépend de la vitesse tangentielle Vt = $\Omega R$. Pour une position angulaire quelconque $\theta$ d'une pale 10, la composante de translation s'exprime par :

$$\omega_{trans} = Vt/D = \Omega R/D$$

Où D est la distance entre l'extrémité de la pale et l'objet le plus proche dans le prolongement de la pale (dans l'axe optique du capteur de flux 12 correspondant).

Ainsi

$$\omega_{tot} = \Omega(1 + R/D)$$

Ce qui permet d'exprimer la distance en fonction du flux total mesuré :

$$D = R\Omega/(\omega_{tot} - \Omega)$$

Dans le cas d'un hélicoptère, la vitesse angulaire $\Omega$ est sensiblement constante et connue, de l'ordre de 40 radians par seconde pour un rotor à trois pales et un diamètre de 10 m. La puissance de propulsion est ajustée en modifiant le pas des pales. La longueur des pales étant de l'ordre de 5 m, la vitesse tangentielle Vt est significative, de l'ordre de 200 m/s. Cette vitesse est si élevée que la plupart des autres mouvements, survenant notamment au cours d'un vol de l'hélicoptère parmi des obstacles, ont une influence négligeable sur le flux optique, de sorte que leur compensation est superflue.

La vitesse de croisière d'un hélicoptère, pouvant atteindre 100 m/s, pourrait avoir une influence sur le flux optique mesuré. Cependant, une telle vitesse de croisière n'est utilisée qu'en terrain dégagé, ne nécessitant en principe pas de surveillance d'obstacles.

L'application du principe de mesure à un hélicoptère à rotors contrarotatifs permet de s'affranchir d'un éventuel problème lié à la vitesse de vol. En effet, les pales des deux rotors balayent le terrain en sens inverse, de sorte que la vitesse de vol s'ajoute aux unes et se soustrait aux autres pour une position angulaire donnée $\theta$. Ainsi, la vitesse de vol disparaît dans le calcul de la moyenne du flux produit par une pale du premier rotor et du flux produit par une pale du deuxième rotor à la même position angulaire $\theta$.

En tout cas, la vitesse de vol de l'hélicoptère est généralement mesurée. Cette mesure de la vitesse de vol peut, le cas échéant, être utilisée pour compenser les mesures de flux optique en connaissant les positions angulaires des mesures de flux optique.

Le pas des pales a théoriquement une influence sur la mesure de flux, puisque la modification du pas modifie l'inclinaison du capteur de flux par rapport à son axe de déplacement. Cependant, le pas étant ajusté dans une plage d'environ 5° d'amplitude, l'influence n'est que de 0,4 % (1 - cos 5°), de sorte qu'une compensation est également superflue.

Tandis que les pales 10 tournent, les capteurs de flux 12 sondent les obstacles se trouvant tout autour de l'hélicoptère dans le prolongement du plan des pales. Les obstacles frontaux, situés sur l'axe de déplacement de l'hélicoptère, même petits, sont détectables avec autant de précision que les autres obstacles. La présence d'un obstacle proche est caractérisée par un maximum local du flux optique mesuré par un capteur 12 donné, et l'orientation de l'obstacle par rapport à l'axe longitudinal de l'hélicoptère est fournie par la position angulaire de la pale dans le plan contenant les pales à laquelle le maximum local est mesuré. La position angulaire de la pale, si elle n'est pas fournie par un capteur présent dans l'hélicoptère, peut être déduite à partir de la vitesse angulaire du rotor et d'un repère sur l'hélicoptère qui est situé dans le champ balayé par les capteurs de flux, comme l'aileron de queue ou le rotor anti-couple.

La figure 2 représente en outre un obstacle particulier, à savoir une paroi verticale 14, comme une falaise ou une façade d'immeuble. Dans certaines interventions en hélicoptère, il est souhaitable de s'approcher le plus près possible de la paroi. Cependant, il est difficile d'évaluer la distance d'une paroi par rapport aux extrémités des pales, et notamment de maintenir une distance suffisante tout en manœuvrant l'hélicoptère. Sur une paroi longue, il est en outre difficile de reconnaître le point le plus proche.

Le fait que les capteurs de flux 12 présentent une trajectoire circulaire s'avère utile dans cette situation. En effet, le flux de translation, au lieu d'être quasi constant comme dans le cas d'une trajectoire rectiligne, s'exprime par :

$$\omega_{trans} = Vt \frac{\cos^2(\theta - \theta_0)}{R(1 - \cos(\theta - \theta_0)) + D_{min}}$$

Où $\theta$ est l'angle de la pale 10 considérée par rapport à l'axe longitudinal de l'hélicoptère, $\theta_0$ est l'angle de la pale par rapport à l'axe longitudinal de l'hélicoptère lorsque son extrémité est au plus près de la paroi (par exemple la pale de droite à la figure 2), et $D_{min}$ est la distance mesurée pour $\theta = \theta_0$ (distance la plus courte).

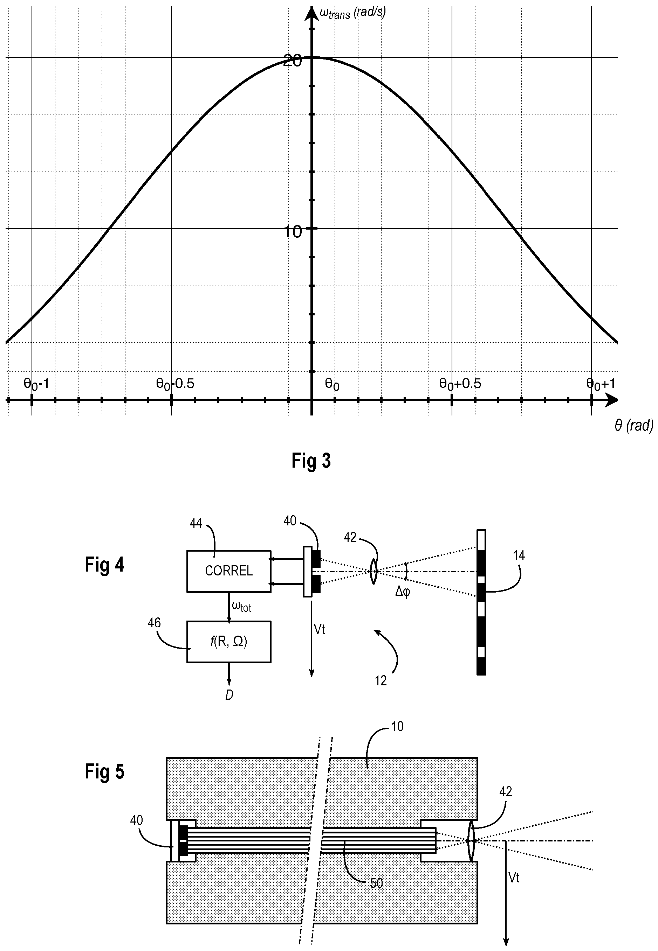

La figure 3 est un graphe illustrant l'évolution du flux optique de translation $\omega_{trans}$ en fonction de la position angulaire d'une pale, pour R = 5 m, $D_{min}$ = 10 m, et Vt = 200 m/s. Le flux de translation présente un maximum local marqué pour $\theta = \theta_0$. Ainsi, l'évaluation de la distance à une paroi et la détermination de l'orientation de celle-ci suivent la même méthodologie que pour détecter un obstacle isolé, à savoir la recherche d'un maximum local parmi les échantillons de mesure, et la détermination de l'angle de pale auquel est relevé ce maximum local.

Les mesures de flux optique étant basées sur les contrastes des objets observés, on propose des capteurs de flux optique dédiés, significativement plus simples que des caméras exploitées par un algorithme de traitement d'image. De tels capteurs sont dénommés LMS (« Local Motion Sensor »), ou capteur de mouvement local, et sont inspirés de la vision des insectes. De tels capteurs sont en outre bien adaptés à une mise en oeuvre à des vitesses élevées, par exemple de l'ordre de 200 m/s aux extrémités des pales d'un hélicoptère. En effet, leur simplicité implique de faibles ressources de calcul, ce qui permet de fournir les mesures à une cadence compatible avec la vitesse de déplacement élevée. Ils sont en outre légers, donc peu sollicités lorsqu'ils sont soumis aux forces centrifuges rencontrées à l'extrémité d'une pale d'hélicoptère. Des capteurs LMS sont décrits, par exemple, par Fabien Expert et al., dans l'article "Outdoor field performances of insect-based visual motion sensors" (Journal of Field Robotics 2011).

La figure 4 représente schématiquement un exemple de capteur LMS élémentaire dirigé vers la paroi 14, illustrée ici par une succession de contrastes. Le capteur comprend un couple de photodiodes 40 alignées dans la direction du déplacement à mesurer, ici selon la vitesse tangentielle Vt. Une lentille 42 est agencée pour que les deux photodiodes observent la scène selon deux axes écartés d'un angle faible $\Delta\varphi$, de l'ordre de 1°.

En bref, le flux optique est déterminé comme le rapport entre l'écart angulaire $\Delta\varphi$ et le temps écoulé entre les détections d'un même motif contrasté par les deux photodiodes.

Les signaux issus des deux photodiodes sont normalement identiques mais décalés dans le temps. Ils subissent un filtrage passe-bande puis une corrélation en 44 qui permet de mesurer l'écart temporel entre les deux signaux. Le flux optique est l'inverse de cet écart temporel multiplié par l'écart angulaire. Finalement, la distance D est obtenue en 46 à partir du rayon R et de la vitesse angulaire $\Omega$, paramètres connus.

Pour améliorer les mesures, le capteur LMS peut être configuré pour que chaque photodiode présente une sensibilité angulaire sensiblement gaussienne caractérisée par l'angle à mi-hauteur appelé $\Delta\rho$. Cette sensibilité angulaire gaussienne peut être obtenue, par exemple, en défocalisant légèrement la lentille 42. Cela permet notamment de réaliser un filtrage spatial passe-bas limitant les fausses mesures de flux optique. Cette configuration est décrite, par exemple, dans [F. L. Roubieu, F. Expert, M. Boyron, B. Fuchslock, S. Viollet, F. Ruffier (2011) "A novel 1-gram insect based device measuring visual motion along 5 optical directions", IEEE Sensors 2011 conférence, Limerick, Ireland, pp. 687-690]. Cette technique tend à rendre le capteur LMS « myope ».

En d'autres termes, le capteur est inopérant au-delà d'une certaine distance. Un capteur LMS mis en oeuvre dans des pales d'hélicoptère peut être conçu pour avoir une portée de 20 à 30 m, ce qui est suffisant pour de nombreuses situations, notamment de vol stationnaire à proximité de parois verticales.

Des variantes plus performantes de capteur LMS comprennent plusieurs paires de photodiodes alignées, souvent trois paires.

L'ensemble des éléments de la figure 4 pourrait être monté au bout de chaque pale de l'hélicoptère. Dans certaines applications, cet ensemble pourrait cependant être trop lourd ou encombrant compte tenu des dimensions de la pale, notamment s'il s'agit d'une pale d'un rotor de drone.

La figure 5 illustre une variante du capteur de la figure 4 pouvant être installée dans des pales de petite taille. Le capteur de la figure 4 est scindé en deux parties. Seul le système optique 42 du capteur est monté à l'extrémité distale de la pale 10, par exemple dans un logement aménagé à cet effet dans la pale. Les photodiodes 40, pouvant être montées avec leurs circuits d'exploitation sur un module plus encombrant, sont déportées à l'extrémité proximale de la pale, près du centre du rotor. Un faisceau de fibres optiques 50 relie le système optique 42 aux photodiodes 40. Ce faisceau 50 peut être noyé dans la masse de la pale lors du moulage de la pale ou glissé dans un canal préalablement aménagé dans la pale. Le faisceau 50 peut comporter de nombreuses fibres optiques individuelles qui assurent des guidages indépendants des flux destinés aux deux photodiodes.

Un système de mesure ainsi aménagé dans les pales du rotor principal d'un hélicoptère permet de détecter des obstacles dans le plan contenant les pales, et au-delà de ce plan selon l'angle de vision des capteurs utilisés. Si on souhaite détecter des obstacles également dans un plan vertical, on pourrait appliquer le système de mesure au rotor anti-couple de l'hélicoptère, si celui-ci n'est pas dans un fenestron.

Aussi, pour du suivi de terrain automatique et pour des problématiques d'appontage où la mesure de la distance entre un aéronef et la plateforme d'atterrissage mobile est souhaitable, il est possible d'orienter les capteurs de flux optique perpendiculairement au plan contenant les pales, c'est-à-dire axialement. Dans ce cas, la composante de rotation $\omega_{rot}$ liée à la rotation du rotor disparaît des mesures brutes fournies par les capteurs de flux optique, mais il est alors possible qu'il faille tenir compte des variations du pas des pales.

De nombreuses variantes et modifications des modes de réalisation décrits ici apparaîtront à l'homme du métier. Bien que le système de mesure de distance ait été décrit essentiellement en relation avec un hélicoptère, il peut être utilisé dans tout véhicule, qu'il possède ou non des pales. Si le véhicule ne possède pas de pales à l'origine, un élément tournant, tel qu'un disque ou un anneau, peut être monté à cet effet sur le véhicule, dans un plan que l'on souhaite surveiller.

Le dispositif de mesure de distance a été décrit en relation avec un véhicule, et on a montré son efficacité notamment lorsque le véhicule est immobile. Le dispositif de mesure peut également être intégré à un objet immobile muni d'un élément tournant, comme une éolienne, pour détecter l'approche d'éléments volants et prendre des mesures de sécurité (comme le freinage des pales) si ces éléments volants s'approchent trop des pales.

**Revendications**

1. Dispositif de mesure de distance d'un obstacle à un objet (8), comprenant :

   • un élément rotatif (10) adapté à être monté sur l'objet, configuré pour tourner en permanence à une vitesse de rotation déterminable ;
   • un capteur de flux optique (12) configuré pour mesurer un flux optique en un point excentré de l'élément rotatif, d'où il résulte que l'excentration du point de mesure introduit une composante de vitesse de translation dans le flux optique mesuré ; et
   • un circuit d'exploitation (44, 46) du capteur de flux optique configuré pour déterminer la distance (D) de l'obstacle à partir de la composante de vitesse de translation dans le flux optique mesuré, même lorsque l'objet est immobile.

2. Dispositif selon la revendication 1, dans lequel le capteur de flux optique est configuré pour mesurer le flux optique radialement.

3. Dispositif selon la revendication 1, dans lequel le capteur de flux optique est configuré pour mesurer le flux optique axialement.

4. Dispositif selon la revendication 2, dans lequel le circuit d'exploitation (44, 46) est configuré pour déterminer la distance (D) de l'obstacle à partir d'un maximum de flux optique mesuré ($\omega_{tot}$) au cours d'une révolution de l'élément rotatif, de l'excentration du point de mesure (R), et de la vitesse de rotation ($\Omega$).

5. Dispositif selon la revendication 4, dans lequel le circuit d'exploitation est configuré pour déterminer l'orientation de l'obstacle à partir de la position angulaire de l'élément rotatif pour laquelle le maximum de flux optique est mesuré.

6. Dispositif selon la revendication 1, dans lequel le capteur de flux optique est un capteur de mouvement local.

7. Dispositif selon la revendication 6, dans lequel le capteur de flux optique comprend :

   • un système optique (42) monté excentré sur l'élément rotatif,
   • un capteur photosensible (40) déporté à proximité du centre de rotation de l'élément rotatif, et
   • des fibres optiques (50) reliant le système optique au capteur photosensible.

8. Dispositif selon la revendication 1, dans lequel les valeurs de la vitesse de rotation et de l'excentration sont propres à rendre négligeables d'autres composantes de vitesse survenant au cours de l'utilisation du dispositif.

9. Dispositif de mesure selon la revendication 8, dans lequel une pale de rotor d'hélicoptère forme l'élément rotatif et le capteur de flux optique (12) est configuré pour mesurer le flux optique à l'extrémité distale de la pale.

10. Procédé de mesure de distance d'un obstacle, comprenant les étapes suivantes :

    • mesurer un flux optique radialement en rotation sur un cercle dans un plan coupant l'obstacle, le rayon du cercle introduisant une composante de vitesse de translation dans le flux optique mesuré ; et
    • déterminer la distance de l'obstacle en fonction de l'amplitude du flux optique, du rayon du cercle, et de la vitesse de rotation.

**EP 3 523 602 B1**

**Patentansprüche**

1. Vorrichtung zum Messen eines Abstands von einem Hindernis zu einem Objekt (8), die Folgendes umfasst:

   • ein Drehelement (10), das geeignet ist, an dem Objekt montiert zu werden, das konfiguriert ist, sich kontinuierlich mit einer bestimmbaren Drehgeschwindigkeit zu drehen;
   • einen Sensor für optischen Fluss (12), der zum Messen eines optischen Flusses an einem exzentrischen Punkt des Drehelements konfiguriert ist, von wo die Exzentrierung des Messpunkts eine Fahrgeschwindigkeitskomponente in den gemessenen optischen Fluss einführt; und
   • eine Auswerteschaltung (44, 46) des Sensors für optischen Fluss, die zum Bestimmen des Abstands (D) des Hindernisses von der Fahrgeschwindigkeitskomponente in dem gemessenen optischen Fluss konfiguriert ist, selbst wenn das Objekt unbeweglich ist.

2. Vorrichtung nach Anspruch 1, wobei der Sensor für optischen Fluss zum radialen Messen des optischen Flusses konfiguriert ist.

3. Vorrichtung nach Anspruch 1, wobei der Sensor für optischen Fluss zum axialen Messen des optischen Flusses konfiguriert ist.

4. Vorrichtung nach Anspruch 2, wobei die Auswerteschaltung (44, 46) zum Bestimmen des Abstands (D) des Hindernisses von einem gemessenen Maximum des optischen Flusses ($\omega_{tot}$) im Laufe einer Umdrehung des Drehelements, der Exzentrizität des Messpunktes (R) und der Drehgeschwindigkeit ($\Omega$) konfiguriert ist.

5. Vorrichtung nach Anspruch 4, wobei die Auswerteschaltung zum Bestimmen der Ausrichtung des Hindernisses von der Winkelposition des Drehelements konfiguriert ist, für das das Maximum des optischen Flusses gemessen wird.

6. Vorrichtung nach Anspruch 1, wobei der Sensor für optischen Fluss ein Sensor für lokale Bewegung ist.

7. Vorrichtung nach Anspruch 6, wobei der Sensor für optischen Fluss Folgendes umfasst:

   • ein optisches System (42), das exzentrisch an dem Drehelement montiert ist,
   • einen lichtempfindlichen Sensor (40), der in der Nähe von dem Drehzentrum des Drehelements versetzt ist, und
   • optische Fasern (50), die das optische System mit dem lichtempfindlichen Sensor verbinden.

8. Vorrichtung nach Anspruch 1, wobei die Werte der Drehgeschwindigkeit und der Exzentrizität derart sind, dass sie andere Geschwindigkeitskomponenten, die im Laufe des Gebrauchs der Vorrichtung auftreten, unbedeutend machen.

9. Messvorrichtung nach Anspruch 8, wobei ein Hubschrauberrotorblatt das Drehelement ausbildet und der Sensor für optischen Fluss (12) zum Messen des optischen Flusses an dem distalen Ende des Blatts konfiguriert ist.

10. Verfahren zum Messen des Abstands zu einem Hindernis, das die folgenden Schritte umfasst:

   • radiales Messen eines sich im Kreis drehenden optischen Flusses in einer das Hindernis schneidenden Ebene, wobei der Radius des Kreises eine Verschiebungsgeschwindigkeitskomponente in den gemessenen optischen Fluss einführt; und
   • Bestimmen des Abstands des Hindernisses in Abhängigkeit von der Amplitude des optischen Flusses, des Radius des Kreises und der Drehgeschwindigkeit.

**Claims**

1. A device for measuring the distance of an obstacle to an object (8), comprising:

   a rotating element (10) adapted to be mounted on the object, configured to rotate continuously at a determinable rotational speed;
   an optical flow sensor (12) configured to measure an optical flow at an eccentric point of the rotating element, whereby the eccentricity of the point of measurement introduces a linear travel velocity component in the measured optical flow; and

an operating circuit (44, 46) of the optical flow sensor, configured to determine the distance (D) of the obstacle based on the linear travel velocity component in the measured optical flow, even when the object is stationary.

2. The device according to claim 1, wherein the optical flow sensor is configured to measure the optical flow radially.

3. The device according to claim 1, wherein the optical flow sensor is configured to measure the optical flow axially.

4. The device according to claim 2, wherein the operating circuit (44, 46) for the optical flow sensor is configured to determine the distance (D) of the obstacle from a maximum of the optical flow ($\omega_{tot}$) measured during a revolution of the rotating element, the eccentricity of the measuring point (R), and the rotational speed ($\Omega$).

5. The device according to claim 4, wherein the operating circuit is configured to determine the orientation of the obstacle from the angular position of the rotating element at which the maximum optical flow is measured.

6. The device of claim 1, wherein the optical flow sensor is a local motion sensor.

7. The device according to claim 6, wherein the optical flow sensor comprises:

an optical system (42) eccentrically mounted on the rotating element,
a photosensor (40) offset near the center of rotation of the rotating element, and
optical fibers (50) connecting the optical system to the photosensor.

8. The device according to claim 1, wherein the rotational speed and eccentricity values are such that they render negligible other velocity components occurring during the use of the device.

9. A measuring device according to claim 8, wherein a helicopter rotor blade is the rotating element and the optical flow sensor (12) is configured to measure the optical flow at the distal end of the blade.

10. A method for measuring the distance of an obstacle, comprising the following steps:

measuring an optical flow radially while rotating along a circle in a plane intersecting the obstacle, the radius of the circle introducing a linear travel speed component in the measured optical flow; and
determining the distance of the obstacle as a function of the amplitude of the optical flow, the radius of the circle, and the speed of rotation.

**Fig 1A**

**Fig 1B**

**Fig 2**

**Fig 3**

**Fig 4**

**Fig 5**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **LAURENT MURATET et al.** A Contribution to Vision-Based Autonomous Helicopter Flight in Urban Environments. *Robotics and Autonomous Systems,* 31 Mars 2005, vol. 50 (4), 195-209
- **SIMON ZINGG et al.** MAV Navigation through Indoor Corridors Using Optical Flow. *ICRA,* 2010
- **RUFFIER F et al.** Visual control of two aerial micro-robots by insect-based autopilots. *ADVANCED ROBO, VSP, ZEIST, NL,* 01 Janvier 2004, vol. 18, 771-786
- Biologically-inspired visual scanning sensor for stabilization and tracking. **VIOLLET S et al.** INTELLIGENT ROBOTS AND SYSTEMS, 1999. IROS '99. PROCEEDINGS. 1999 IEEE /RSJ INTERNATIONAL CONFERENCE ON KYONGJU, SOUTH KOREA 17-21 OCT. 1999, PISCATAWAY, NJ, USA. IEEE, 17 Octobre 1999, vol. 1, 204-209
- **FABIEN EXPERT et al.** Outdoor field performances of insect-based visual motion sensors. *Journal of Field Robotics,* 2011
- **F. L. ROUBIEU ; F. EXPERT ; M. BOYRON ; B. FUCHSLOCK ; S. VIOLLET ; F. RUFFIER.** A novel 1-gram insect based device measuring visual motion along 5 optical directions. *IEEE Sensors 2011 conférence, Limerick, Ireland,* 2011, 687-690